# EUROPEAN PATENT SPECIFICATION

(11) **EP 4 388 625 B1**
(45) Date of publication and mention of the grant of the patent: **03.09.2025**
(21) Application number: 22773777.2
(22) Date of filing: 29.07.2022
(51) Int. Cl.: H01S 3/1115, H01S 3/00, H01S 3/0941, H01S 3/23, H01S 3/16, H01S 3/081

(54) **LASER APPARATUS FOR THE EMISSION OF ULTRA-SHORT LIGHT PULSES AT HIGH ENERGY AND HIGH REPETITION FREQUENCY AND RESPECTIVE OPTOELECTRONIC DEVICE**
LASERGERÄT ZUR EMISSION VON ULTRAKURZEN LICHTIMPULSEN MIT HOHER ENERGIE UND HORER REPETITIONSRATE UND KORRESPONDIERENDES OPTO-ELEKTRONISCHES GERÄT
APPAREIL LASER POUR L' EMISSION D`IMPULSIONS LUMINEUSES ULTRACOURTS A HEUTE ENERGIE ET HAUTE FREQUENCE DE REPETITION ET DISPOSITIF OPTO-ELECTRONIQUE CORRESPONDANTE

(30) Priority: 18.08.2021 IT 202100022043
(43) Date of publication of application: 26.06.2024
(73) Proprietor: LITHIUM LASERS S.R.L., 20123 Milano (IT)
(72) Inventor: GREBORIO, Alessandro, 20123 Milano (IT)
(74) Representative: Feltrinelli, Secondo Andrea
(86) International application number: PCT/IB2022/057068
(87) International publication number: WO 2023/021351

(56) References cited:
- US-A1- 2011 206 072
- US-A1- 2020 343 682
- SOROKINA IRINA T ET AL: "Femtosecond Cr2+-Based Lasers", IEEE JOURNAL OF SELECTED TOPICS IN QUANTUM ELECTRONICS, IEEE, USA, vol. 21, no. 1, 1 January 2015 (2015-01-01), pages 1 - 19, XP011558116, ISSN: 1077-260X, [retrieved on 20140904], DOI: 10.1109/JSTQE.2014.2341589

## Description

### TECHNICAL FIELD OF THE INVENTION

The present invention relates to an emission LASER apparatus of ultrashort light pulses with a temporal duration of each light pulse of the order comprised between 10 picoseconds and 10 femtoseconds, a repetition frequency greater than or equal to 500 MHz and a value of energy of each pulse between about 2 nJ and 20 nJ, as well as an optoelectronic device that uses this LASER apparatus.

In particular, the aforementioned optoelectronic device is particularly suitable for use for precision LASER machining.

Furthermore, the present invention also relates to a method of emitting packets of ultrashort light pulses with a temporal duration of each light pulse of the order comprised between 10 picoseconds and 10 femtoseconds, a repetition frequency greater than or equal to 500 MHz and a value of energy of each pulse between about 2 nJ and 20 nJ by means of the aforementioned optoelectronic device.

### STATE OF THE ART

In art, different types of devices are known, in particular LASER devices, for the emission of ultrashort light pulses.

Typically, these devices are used in industrial applications of micromachining and/or microsoldering since they allow to deliver optical energy with extreme precision. In fact, using ultrashort pulse LASER devices, it is possible to produce, by means of direct photofabrication techniques, two-dimensional (2D) and three-dimensional (3D) structures of almost arbitrary shape with sub-micrometric dimensions. An application example of this is femtosecond lithography, in which an ultrashort pulse LASER device is used for direct engraving on a material or for imprinting a photosensitive mask.

Of course, these devices are also used in other application fields, such as non-linear optics, biophotonics and life sciences in general.

Generally, such devices consist of an oscillator, a stretcher, a multistage amplifier, and a compressor.

The oscillator provides a plurality of low energy pulses, for example a continuous train of pulses, typically of a few picoJoules, and with a temporal duration of the order of hundreds of femtoseconds up to a few picoseconds. The plurality of pulses is sampled by means of a modulator which has the purpose of reducing the repetition rate of the initial plurality of pulses. The selected pulses are temporally lengthened up to hundreds of picoseconds by means of the stretcher and injected into a chain of optical amplifiers in order to reach the energy required for the particular application considered, to then be compressed by the compressor at the initial temporal duration.

With this technique it is possible to obtain single equally spaced pulses, with a temporal separation that can vary from milliseconds to just under a microsecond, with energy for each pulse ranging from hundreds of nanoJoules up to a few milliJoules.

Subsequently, by focusing these pulses on the surface of the material to be processed, it is possible to carry out the micromachining in a very precise way. The use of these LASER devices, however, involves a compromise at the application level in the processing of the material: as the processing speed increases, there is a decrease in precision. This compromise arises because, according to this approach with temporally equally spaced pulses, to increase the processing speed it is necessary to increase the energy of each individual pulse.

Consequently, to obtain processing speeds compatible with particular industrial applications, the energy of each output pulse from the amplifier is kept far above the suitable processing threshold. This excess of energy leads to the formation of dense clouds of plasma around the processing point which limit the processing efficiency and precision.

A solution to this drawback is provided by LASER devices with ultrashort pulse packets and high repetition frequency, which allow both high processing efficiency, as each output pulse has sufficient energy to remove the material but insufficient to create spurious phenomena, and a high removal accuracy, since the absence of plasma clouds determines an excellent ballistic accuracy of the photons of the light pulses incident on the material.

Such devices use oscillators that emit packets containing ultrashort light pulses with a high repetition rate but with a low energy, typically of a few picoJoules. The energy of each pulse of each packet therefore needs to be subsequently amplified, generally through a multistage amplification chain, in order to be raised up to a value compatible with the application needs of the device.

As it can be understood, the fact that the oscillator, in order to work safely and with stability, can emit only low-energy light pulses, causes both a considerable increase in the architectural complexity of the device, and high manufacturing costs for it since multiple amplifiers are required to raise the pulse energy safely and without damaging the device.

Moreover, these LASER devices provide for the use of a stretcher and a compressor to amplify the light pulses of the order of femtoseconds, thus further increasing the complexity and costs of the device itself.

The publication from I.T. Sorokina et al.: "Femtosecond Cr2+-Based Lasers", IEEE Journal of Selected Topics in Quantum Electronics, IEEE, USA, vol. 21, no. 1, 1 January 2015, XP011558116 discloses a passively mode-locked laser apparatus with a graphene saturable absorber, emitting a plurality of ultrashort light pulses with durations of 61 fs, repetition frequency of 250 MHz and energy values of the pulses of 3.8 nJ by means of a laser oscillator pumped by pumping beams.

US 2020/343682 A1 discloses a laser apparatus emitting a train of fs-light pulses with a repetition frequency ≥ 1 GHz operating, in use, in passive Mode-Locking operating mode wherein the oscillator includes pumping means that generate a plurality of ultrashort light pulses, and amplify the energy of each ultrashort light pulse of such plurality.

It is therefore necessary to design and manufacture an emission LASER apparatus of ultrashort light pulses with high repetition frequency and high energy, as well as an optoelectronic device using this LASER apparatus, which allow to overcome the disadvantages of the prior art listed above.

### OBJECTS OF THE INVENTION

The main object of the present invention is to provide an emission LASER apparatus of ultrashort light pulses with a temporal duration of each light pulse of the order comprised between 10 picoseconds and 10 femtoseconds, a repetition frequency greater than or equal to 500 MHz and a value of energy of each pulse between about 2 nJ and 20 nJ which allows to overcome the disadvantages of the prior art listed and allows it to be used safely and with high operational stability, preventing the internal components of such LASER apparatus break after a few cycles of use.

Another object of the present invention is to provide an optoelectronic device for the emission of a plurality of packets of ultrashort light pulses with a temporal duration of each light pulse of the order comprised between 10 picoseconds and 10 femtoseconds, a repetition frequency greater than or equal to 500 MHz and a value of energy of each pulse between about 2 nJ and 20 nJ which allows, with the same efficiency, a lower manufacturing and construction complexity than the devices taught by the prior art.

The optoelectronic device of the present invention allows a cost reduction with respect to the devices taught by the prior art, allows for optimized speed and operating quality as well as greater processing efficiency, and further allows high scalability.

According to an aspect of the invention, an emission LASER apparatus according to claim 1 is provided.

In accordance with another aspect of the invention, an optoelectronic device for the emission of a plurality of packets of ultrashort light pulses according to claim 7 is provided.

According to a further aspect of the invention, a method of emitting a plurality of packets of ultrashort light pulses according to claim 15 is provided.

The dependent claims refer to preferred and advantageous embodiments of the invention.

### BRIEF DESCRIPTION OF THE DRAWINGS

Other characteristics and advantages of the invention will be more evident from the description of an example of embodiment of an emission LASER apparatus of a plurality of ultrashort light pulses with a temporal duration of each light pulse of the order comprised between 10 picoseconds and 10 femtoseconds, a repetition frequency greater than or equal to 500 MHz and a value of energy of each pulse between about 2 nJ and 20 nJ and of an optoelectronic device for the emission of said plurality of packtes of ultrashort light pulses, illustrated by way of example in the accompanying drawings in which:
figure 1 is a block diagram of an emission LASER apparatus according to an embodiment of the present invention;
figure 2 is a block diagram of an optoelectronic device according to an embodiment of the present invention;
figure 3 shows in more detail a block diagram of the modulation means used in the optoelectronic device according to the example of embodiment of figure 2;
figure 4 shows in more detail a block diagram of the amplification means used in the optoelectronic device according to the example of embodiment of figure 2.

In the accompanying drawings, identical parts or components are indicated by the same reference numbers.

### EXAMPLES OF EMBODIMENT OF THE INVENTION

With reference to the attached figures, the reference number 3 indicates an emission LASER apparatus of a plurality 2 of ultrashort light pulses 2a with high energy and high repetition frequency according to an example of embodiment of the present invention.

This emission LASER apparatus 3 is particularly, but not exclusively, suitable for being used in optoelectronic devices for industrial applications, such as for example micromachining and/or microsoldering of materials.

It should be noted that the term "ultrashort light pulses" refers to a temporal duration of each light pulse 2a of the order comprised between about 10 picoseconds and about 10 femtoseconds.

In particular, the emission LASER apparatus 3 according to the present invention is preferably designed to emit a plurality 2 of light pulses 2a each having a temporal duration comprised between about 5000 femtoseconds and about 100 femtoseconds, if desired between about 1000 femtoseconds and about 100 femtoseconds, or between about 500 femtoseconds and about 100 femtoseconds, for example about 300 femtoseconds.

It should also be noted that the term "light pulses with high energy" is to be considered with reference to the typical energy values of the light pulses emitted by the emission apparatuses or more particularly by the LASER oscillators according to the prior art, which they are attested to be of the order of a few picoJoule.

The emission LASER apparatus 3 of a plurality 2 of ultrashort light pulses 2a according to the present invention is configured to emit a plurality 2 of ultrashort light pulses 2a with a repetition frequency *fᵣ* greater then or equal to about 500 MHz, or even greater than or equal to about 750 MHz, for example 1 GHz, and in which each light pulse 2a of the plurality 2 of ultrashort light pulses 2a has an energy value *Eₚ* comprised between about 2 nJ and about 20 nJ, if desired between about 2 nJ and about 10 nJ, or again between 3 nJ and 8nJ, for example about 5 nJ.

Clearly, emitting a plurality 2 of ultrashort light pulses 2a with a repetition frequency *fᵣ* greater than or equal to about 500 MHz means that each light pulse 2a of the plurality 2 will have a temporal spacing from the next less than or equal to about 2 ns.

According to a non-limiting example of embodiment of the present invention, the emission LASER apparatus 3 emits a plurality 2 of ultrashort light pulses 2a with a repetition frequency *fᵣ* equal to about 1 GHz and, consequently, with a temporal spacing of each pulse of light 2a from the next equal to about 1 ns.

As can be understood, the temporal spacing of each light pulse 2a is different from its temporal duration, the latter being the time in which the optical intensity of the pulse 2a remains above 50% of its peak value, and that in the case of the present invention it is, as previously mentioned, preferably between about 5000 femtoseconds and about 100 femtoseconds, if desired between about 1000 femtoseconds and about 100 femtoseconds, or between about 500 femtoseconds and about 100 femtoseconds, for example about 300 femtoseconds .

The use of a high repetition frequency *fᵣ* falls within the parameters that typically limit the energy value *Eₚ* of each light pulse 2a of the plurality 2. In the present invention, however, the emission LASER apparatus 3 is capable of effectively reconciling a high repetition frequency *fᵣ* with a high energy *Eₚ* of each light pulse 2a of the plurality 2.

The emission LASER apparatus 3 can advantageously be or comprise a LASER oscillator 3a, for example a vertical cavity surface emission LASER oscillator or VCSEL or, preferably and according to the non-limiting example of embodiment of the present invention shown in the figures, a solid-state LASER oscillator 3a preferably operating, in use, in the passive Mode-Locking operating mode.

In other examples, not forming part of the invention, the solid-state oscillator 3a LASER could operate, in use, in active Mode-Locking operating mode, for example using an electro-optical or acousto-optical modulator. However, this active Mode-Locking mode has the disadvantage of being able to sustain or, in any case, transform the light pulses 2a, in general, only up to the order of picoseconds, while with the passive Mode-Locking mode it is possible to reach up to the order of femtoseconds.

The Mode-Locking technique allows the production of a plurality 2 of ultrashort light pulses 2a through the introduction of a fixed phase relationship between the modes, i.e., the wavelengths, of the resonant cavity of the oscillator 3a, which will be discussed in detail later in the description.

More in detail, the modes of the resonant cavity will periodically interfere in a constructive way with each other, producing a light pulse 2a with a temporal duration dependent on the intrinsic properties of the oscillator 3a.

In particular, the LASER oscillator 3a preferably comprises pumping means 3b, intended, in use, to generate at least one optical light source designed to be switched or transformed first into resonant light and then into a plurality 2 of ultrashort light pulses 2a, and subsequently intended to amplify the energy *Eₚ* of each ultrashort light pulse 2a of said plurality 2, and a resonant cavity RC which includes directing means 3c.

In this regard, the pumping means 3b can advantageously comprise at least one gain means 6 and at least one pumping element 7 configured to emit, in use, at least one pumping light beam PB1 while the directing means 3c can advantageously be designed to direct the plurality 2 of ultrashort light pulses 2a or the resonant light towards the gain means 6, and the plurality 2 of ultrashort light pulses 2a or the resonant light, amplified by the pumping means 3b, from the gain means 6 towards the output of the resonant cavity RC and vice versa, i.e., back inside the same.

As will be seen in more detail below, the pumping light beam PB1 also constitutes the optical light source of the emission LASER apparatus 3 which will first become resonant light and then will be subsequently transformed into the plurality 2 of ultrashort light pulses 2a. In practice, the pumping element 7 is configured to emit, in use, the at least one pumping light beam PB1 which at the same time also constitutes the optical light source of the emission LASER apparatus 3. It should be considered that the optical light source is able to resonate so as to become resonant light, only if the resonance condition which will be detailed below is satisfied.

Preferably, the pumping means 3b also comprise at least one focusing element 15 intended to focus the at least one pumping light beam PB1 emitted by the pumping element 7 towards the gain means 6, for example at least one lens 15, so as to obtain a pumping light beam PB1 having a diameter dimensionally compatible with the resonant mode supported by the resonant cavity RC at the gain means 6.

The at least one gain means 6 can be or comprise at least one ytterbium ion doped crystal of the Yb: YAG type or of the Yb: CALGO type having an emission wavelength, for example, between about 1020 nm and about 1080 nm.

On the other hand, as regards the at least one pumping element 7, it can advantageously be or comprise at least one LASER diode configured to emit the at least one pumping light beam PB1 with a power of between about 5 W and about 20 W and, if desired, with an emission wavelength between about 935 nm and about 985 nm.

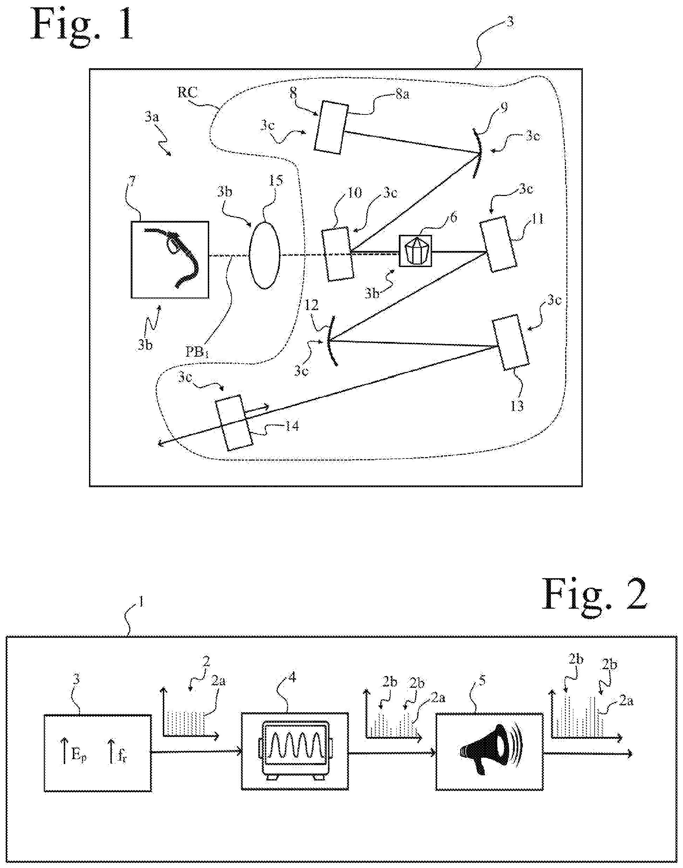

According to the example of embodiment of the present invention shown in figure 1, the LASER diode operates in a continuous wave or CW regime, i.e., it provides, in use, a continuous pumping light beam PB1 over time.

In particular, the at least one LASER diode is, preferably, an optical fiber coupled LASER diode that ends with a collimator so as to emit a pumping light beam PB1 having flat wave fronts.

According to the non-limiting example of embodiment of the present invention shown in figure 1, the at least one gain means 6 is an ytterbium ion doped crystal of the Yb: YAG type while the at least one pumping element 7 is a LASER diode configured to emit the at least one pumping light beam PB1 with a power of approximately 20 W.

The ytterbium ion doped crystal of the Yb: YAG type has been advantageously chosen as the gain means 6 in the example of embodiment shown in figure 1 since it exhibits a very low quantum defect, a very high efficiency, a high thermo-mechanical performance and, therefore, thanks to the high emission power of the pumping light beam PB1 it is possible to obtain a plurality 2 of ultrashort light pulses 2a at the output of the oscillator 3a at high average power, for example up to about 10 W.

The resonant cavity RC or, more particularly, the directing means 3c can advantageously comprise one or more first directing elements 8, 9, 10 intended to direct the resonant light into the resonant cavity RC or the plurality 2 of ultrashort light pulses 2a towards the gain means 6 and one or more second directing elements 11, 12, 13, 14 intended to direct the resonant light in the resonant cavity RC or the plurality 2 of ultrashort light pulses 2a, amplified by the pumping means 3b, from the gain means 6 towards the output of the resonant cavity RC and vice versa, i.e., back inside the same.

Basically, as will be better understood in the following, a first part of the energy of each light pulse 2a of the plurality 2 of ultrashort light pulses 2a, amplified by the pumping means 3b, will be transmitted in output by the oscillator 3a while a second part of energy will be reflected back into the resonant cavity RC through the reverse optical path.

As regards the one or more first directing elements 8, 9, 10, at least one directing element 8 of the same can advantageously be or comprise transformation means 8a intended to transform the optical light source generated by the pumping element 7, in a plurality 2 of ultrashort light pulses 2a and subsequently directing said plurality 2 of ultrashort light pulses 2a towards the gain means 6.

Consider that the wavelength of the plurality 2 of light pulses 2a is equal to that of the resonant light in the resonant cavity RC and, therefore, state that a given optical element has a reflectivity and/or transmissivity of a given percentage at the wavelenght of the plurality 2 of light pulses 2a is equivalent to saying that it has the same reflectivity and/or transmissivity at the wavelength of the resonant light in the resonant cavity RC.

In particular, these transformation means 8a are or comprise preferably a saturable absorber, if desired a solid-state saturable absorber or SESAM, or a non-linear mirror, both of which are designed to induce a non-linear modulation of the amplitude of the resonant electric field which promotes the functioning of the resonant cavity RC in pulsed regime. More specifically, the non-linear mirror comprises a non-linear crystal intended, in use, for the generation of a second harmonic, and a dichroic mirror, used in combination with this non-linear crystal, and configured with a reflectivity greater than or equal to approximately 99% at green wavelengths, i.e., between about 520 nm and about 565 nm, and with reflectivity greater than or equal to about 95% at the wavelength of the plurality 2 of ultrashort light pulses 2a.

As regards, instead, the saturable absorber, it too, similarly to the non-linear mirror mentioned above, is an optical device that has a reflectivity depending on the intensity of the incident light, i.e., that it behaves differently depending on of the intensity of the light incident on it. In the non-limiting example of embodiment of the present invention, in which the solid -state LASER oscillator 3a operates, in use, in the passive Mode-Locking operating mode, this saturable absorber is, in fact, the passive element necessary to force the generation of longitudinal modes with the same phase in the resonant cavity RC.

Basically, the saturable absorber attenuates the low intensity constant wave light while, due to the rather random fluctuations experienced by the oscillator 3a, any peak of light intensity is, in general, reflected more effectively, resulting in fact, the establishment of an impulsed Mode-Locking regime. When the resonant light in the resonant cavity RC exceeds a certain intensity, a process of selective amplification of high intensity noise peaks is established by virtue of the higher absorption of low intensity light by the saturable absorber or SESAM. After many resonant turns or cycles inside the resonant cavity RC, a plurality 2 of ultrashort light pulses 2a are then generated or, in any case, the optical light source emitted by the pumping element 7 is transformed, for example through the combination of resonant cavity RC, which comprises the directing means 3c or, more particularly, the transforming means 8a, and gain means 6 of the pumping means 3b, first into a resonant light and then into a plurality 2 of ultrashort light pulses 2a. In practice, the saturable absorber allows the transition from the ignition phase in which the emission LASER device 3 operates in a continuous wave regime to the stable phase in which the latter operates in a pulsed regime.

It should be noted that, in certain circumstances, for example with the use of a solid-state saturable absorber or SESAM, instabilities may occur, also called Q-Switching instabilities. Such instabilities are caused by the fact that, usually, the saturable absorber "rewards" any increase in the energy of the light pulse 2a within the resonant cavity RC that is above its saturation intensity threshold value through reduced losses, so that, in the various resonance cycles inside the resonant cavity RC, the energy of the light pulse 2a can be amplified in the gain means 6 more than the continuous radiation and therefore, after numerous cycles, prevail on it by establishing the pulsed Mode-Locking regime. Therefore, as long as, during the transition process from the continuous to the pulsed regime, the saturation of the saturable absorber is not strong enough, the aforementioned Q-Switching instabilities can occur, which can destabilize the oscillator 3a or, in the worst case, even burning or rendering unusable the internal components of the resonant cavity RC.

Furthermore, mitigating such Q-Switching instabilities is even more complicated when ultrashort light pulses 2a with high repetition frequency are to be created inside the resonant cavity RC. In fact, the energy of each light pulse 2a is linked to the repetition frequency by an inverse proportionality relationship: high frequencies correspond to low energies and this determines, in the ignition phase of the emission LASER apparatus 3 in which the latter is passing from a continuous wave regime to a pulsed regime, a lower saturation capacity both of the gain and of the transformation means 8a or, more particularly, of the saturable absorber 8a and therefore a greater tendency to Q-switching instability.

In this regard, in order to be able to produce an emission LASER apparatus 3, or more particularly an oscillator 3a, capable of emitting a plurality 2 of ultrashort light pulses 2a as above disclosed, that allow them to be used safely and with high operational stability, for example avoiding that the saturable absorber burns or, more generally, that each optical component of the resonant cavity RC burns, it is advantageous or, in any case, appropriate that the size of the resonant light beam, incident on the gain means 6, remains unchanged from the ignition phase in continuous regime up to the stable phase of pulsed regime.

With regard to this aspect, it is known that the thermal lens effect, that is the effect of the volumetric expansion which causes a curvature of the surface of the gain means in response to its uneven temperature increase, can affect the stability of the resonant cavity. In particular, the thermal lens effect typically generates considerable variations in the size of the resonant light which tend to favor instability of Q-switch Mode Locking where very large fluctuations of the oscillating electric field can burn the saturable absorber or, in any case, the components of the resonant cavity.

For this, the resonant cavity RC is preferably designed so as to be insensitive to the thermal lens effect generated by the incidence of the pumping light on the gain means 6 during the pumping thereof, in the sense that the size of the resonant light or rather, of the resonant light beam, is not substantially influenced by the thermal lens effect generated by the incidence of the pumping beam on the gain means 6 during the passage of the emission LASER apparatus 3 from continuous wave regime to pulsed regime.

In particular, it was first studied through ABCD matrix models and finally empirically observed that, by positioning the focus of the resonant light or, better, of the resonant light beam within a certain distance interval with respect to one of the at least two faces of the gain means 6 crossed by this resonant light, the size of the latter is substantially insensitive to the thermal lens effect generated by the incidence of the pumping beam on the gain means 6 during the passage of the emission LASER apparatus 3 from a continuous wave regime in pulsed regime, i.e., the size of the resonant light beam remains substantially constant in this passage, thus allowing optimal operational stability even with the use of a passive Mode-Locking operating mode with the repetition frequency values *fᵣ* and pulse energy *Eₚ* mentioned above.

In this regard, the resonant cavity RC can advantageously be configured so that the focus of the resonant light is positioned at a distance ranging between about 5 mm and about 30 mm from one of the at least two faces of the gain means 6 crossed by this resonant light.

This allows to obtain a dimension of the resonant light, or rather of the resonant light beam, incident on the gain means 6 which does not appreciably vary between the ignition phase of the emission LASER apparatus 3 and the stable phase of pulsed regime. By doing so, it is possible to fix the size of the resonant light incident on the gain means 6 to ensure that the gain and the saturable absorber are effectively saturated and to minimize Q-switching instabilities.

According to another embodiment of the present invention, the passive Mode-Locking operating mode could be implemented through the Kerr Lens Mode-Locking or KLM technique or through a hybrid technique, i.e., through a combination of KLM and SESAM.

The one or more first directing elements 8, 9, 10 can then be or comprise a mirror 9, if desired concave with concavity facing towards the subsequent first directing element 10 along the path in the resonant cavity RC of the plurality 2 of light pulses 2a towards the gain means 6, configured with a reflectivity greater than or equal to about 99% at the wavelength of the plurality 2 of ultrashort light pulses 2a and/or also a dichroic mirror 10, if desired flat, configured with a reflectivity greater then or equal to about 99% at the wavelength of the plurality 2 of ultrashort light pulses 2a and with a transmissivity greater than or equal to about 95% at the wavelength of the pumping light beam PB1 emitted by the pumping element 7.

In practice, the dichroic mirror 10 allows the transmission of the pumping light beam PB1 towards the gain means 6 and at the same time also the reflection of the resonant light in the resonant cavity RC or of the plurality 2 of light pulses 2a towards the gain means 6, so as to be able to pump the gain means 6 and amplify each light pulse 2a.

As regards, instead, the one or more second directing elements 11, 12, 13, 14, they preferably are or comprise at least one reflection and transmission element or coupler 14 configured in such a way as to allow the transmission of a first part of energy of the resonant light in the resonant cavity RC or of the plurality 2 of ultrashort light pulses 2a, amplified by the pumping means 3b, towards the output of the oscillator 3a and the feedback or reflection of a second part of the energy of the resonant light in the resonant cavity RC or of the plurality 2 of ultrashort light pulses 2a, amplified by the pumping means 3b, again inside the resonant cavity RC through the reverse optical path.

Of course, the percentage of the first part of the energy of the resonant light in the resonant cavity RC or of the plurality 2 of ultrashort light pulses 2a that is transmitted out of the oscillator 3a, as well as the percentage of the second part of the resonant light energy in the cavity resonant RC or of the plurality 2 of ultrashort light pulses 2a which is reflected, is strictly dependent on the constructional features of the reflecting and transmitting element or coupler 14, or on the percentage of reflectivity and transmissivity thereof.

Such at least one reflection and transmission element or coupler 14 can advantageously be or comprise a semi-reflective mirror configured with partial reflectivity between about 75% and about 95% at the wavelength of the plurality 2 of ultrashort light pulses 2a and, consequently, with a transmissivity at the wavelength of the plurality 2 of ultrashort light pulses 2a comprised between about 5% and about 25%.

Basically, a part of radiation comprised between about 5% and about 25% of the total radiation of each ultrashort light pulse 2a of the plurality 2 is transmitted and therefore exits from the emission LASER apparatus 3 or more in particular from the oscillator 3a while the remaining part of radiation comprised between about 75% and about 95% of the total radiation of each ultrashort light pulse 2a of the plurality 2 is reflected and remains in the resonant cavity RC in order to maintain the resonance of the latter.

It is pointed out that the transmissibility and reflectivity values of the at least one reflection and transmission element or coupler 14 are preferably selected so that the gain generated by the amplification by means of the pumping means 3b of the plurality 2 of light pulses 2a exceeds the losses introduced by the directing means 3c of the resonant cavity RC. In fact, the transmissivity value of the at least one reflection and transmission element or coupler 14 constitutes a loss for the resonant cavity RC. In this regard, if a too high transmissivity value of the at least one reflection and transmission element or coupler 14 were chosen, the losses would exceed the gain and the resonant cavity RC would not resonate.

It should be considered that, in general, the gain is defined by the power value that is injected by the pumping element 7 into the gain means 6, by how much the latter is doped and by the diameter of the focus of the pumping light beam PB1 emitted by the pumping element 7 in the gain means 6, while the losses can be approximately estimated as the sum of all the transmissivity values of the directing means 3c that make up the resonant cavity RC.

Moreover, the one or more second directing elements 11, 12, 13, 14 can be or also comprise at least a first dichroic mirror 11, if desired flat, configured with a reflectivity greater than or equal to about 99% of the wavelength of the resonant light or of the plurality 2 of ultrashort light pulses 2a and with a transmissivity greater than or equal to about 95% at the wavelength of the pumping light beam PB1 emitted by the pumping element 7 and/or a second mirror 12 , if desired concave with concavity facing the subsequent second directing element 13 along the optical path in the resonant cavity RC of the resonant light or of the plurality 2 of ultrashort light pulses 2a towards the output of the oscillator 3a, configured with a reflectivity greater than or equal to about 99% at the wavelength of the plurality 2 of ultrashort light pulses 2a and/or a third mirror 13, preferably of the Gires-Tournois type, configured to support the generation of solitons inside the resonant cavity RC.

It should be considered that this third mirror 13 of the Gires-Tournois type is the element that allows, in fact, to reach and/or sustain a duration of light pulses 2a of the order of femtoseconds.

In this regard, having light pulses 2a of the femtosecond order is equivalent, with reference to the frequency domain, to spectral bands of the order of a few nanometers. This results in a large chromatic dispersion of the longitudinal resonant modes inside the resonant cavity RC, which typically "scatters" the chromatic components of the light pulses 2a and does not allow the generation and sustaining of light pulses 2a with a temporal duration of less then a few picoseconds. The third mirror 13 of the Gires-Tournois type, introducing a negative group velocity dispersion for the resonant modes of the resonant cavity RC, allows instead to support the generation of solitons inside it in order to reach and/or maintain a light impulse 2a of duration of the order of femtoseconds.

To summarize, the one or more first directing elements 8, 9, 10 and the one or more second directing elements 11, 12, 13, 14 define an optical path that allows the optical resonance of the plurality 2 of ultrashort light pulses 2a inside the resonant cavity RC and the coupling or transmission of a percentage of the energy of each ultrashort light pulse 2a of the plurality 2 in output from the oscillator 3.

As regards the pumping process, it takes place by means of the pumping means 3b. More specifically, an optical light source, such as the at least one pumping light beam PB1 emitted by the pumping element 7, stimulates the transitions of the atoms of an active means, such as the at least one gain means 6, from the ground state to an excited state, creating a population reversal. The atoms of the active means that are in the excited state in turn emit energy in the form of photons with lower energy than the photons of the pumping beam PB1 and therefore with a longer wavelength, since part of the energy introduced through the process of pumping turns into phonons and then into heat. At this point, having satisfied the resonance condition for which the gain of the resonant cavity RC must be greater than the losses, the energy is re-emitted through a process of stimulated emission, in which the photons emitted in the propagation direction defined by the alignment of the directing means 3c of the resonant cavity RC are amplified, such as the resonant light in a first time interval, i.e., during the ignition phase in which the emission LASER apparatus 3 operates in a continuous regime, and the plurality 2 of amplified ultrashort light pulses 2a in a second time interval, i.e., during the phase in which the emission LASER apparatus 3 operates in a pulsed regime.

Below is described a non-limiting example of operation of the emission LASER apparatus 3 according to the example of embodiment of the present invention shown in figure 1.

The optical light source, as well as the pump source, is constituted by the pumping light beam PB1 emitted by the LASER diode 7. In an initial phase of operation of the emission LASER apparatus 3 or, more particularly, of the oscillator 3a, the LASER diode 7 emits a pumping light beam PB1 in a continuous wave regime, for example with a wavelength of about 940 nm, which is focused, through the lens 15, and transmitted, through the dichroic mirror 10 in the Yb: YAG crystal 6, thus stimulating the population inversion of the atoms of the same for the accumulation of energy in this Yb: YAG crystal 6. The wavelength of the pumping light beam PB1 exiting the Yb: YAG crystal assumes the emission wavelength typical of this active means, for example equal to about 1030 nm. This radiation is then re-emitted by the gain means 6 in each direction, but only the photons re-emitted along the imaginary line defined by the alignment of the directing means 3c that make up the resonant cavity RC are amplified by stimulated emission and can, if the gain of the resonant cavity RC overcomes its losses, resonate, effectively generating the resonant light in the resonant cavity RC. In the positive case, the resonant light thus generated continues towards the dichroic mirror 11 of the one or more second directing elements 11, 12, 13, 14. From here, this resonant light with a wavelength equal to about 1030 nm is directed respectively from the second concave mirror 12 and from the third mirror 13 of the Gires-Tournois type towards the semi-reflective mirror 14. Here a part of the energy of the resonant light will be reflected along the optical path just described in reverse, while another part of energy will be transmitted at the output to the oscillator 3a. Naturally, the percentages of transmitted and reflected energy are defined by the constructional features of the semi-reflective mirror 14.

After numerous operating cycles, the energy of the resonant light becomes large enough to saturate the saturable absorber or SESAM 8a which thus allows the passage of the oscillator 3a from continuous wave regime to pulsed regime, in fact, allowing the transformation of the continuos resonant light in a plurality 2 of ultrashort light pulses 2a.

Following the transformation, through the saturable absorber or SESAM 8a, the plurality 2 of ultrashort light pulses 2a is directed by the one or more first directing elements 8, 9, 10 back towards the Yb: YAG crystal so that the actual amplification occurs. In this regard, the excited atoms of the Yb: YAG crystal are stimulated by the photons of the plurality 2 of ultrashort light pulses 2a to emit photons coherent with them, giving rise to an increase in the intensity of the electromagnetic field and therefore to a plurality 2 of amplified ultrashort light pulses 2a. The latter is directed again by the one or more second directing elements 11, 12, 13 towards the semi-reflective mirror 14 which will transmit part of the energy of the plurality of amplified ultrashort light pulses 2a while reflecting the remaining part of energy, which will travel again the operating cycle just described.

This operating cycle is then iterated for the entire duration of use of the emission LASER apparatus 3.

Clearly, as already mentioned, many operating cycles are required for the emission LASER apparatus 3 to reach the stable phase of pulsed regime.

It should be noted that the non-limiting example of operation described above refers to light pulses 2a having a duration of the order of femtoseconds and therefore, what allows the achievement and sustaining of light pulses 2a of this duration is the mirror 13 of the Gires-Tournois type, as described above.

The emission LASER apparatus 3 according to the present invention therefore allows to emit a plurality 2 of ultrashort light pulses 2a with a repetition frequency *fᵣ* greater than or equal to about 500 MHz and in which each light pulse 2a of this plurality 2 has an energy value Ep between about 2nJ and about 20 nJ.

It is also emphasized that this is done while ensuring operational stability and safety for all components of the emission LASER 3 equipment, mitigating Q-Switching instabilities as much as possible.

As can be understood, the emission LASER apparatus 3 according to the present invention can find an advantageous use and an advantageous implementation in optoelectronic devices for the emission of a plurality 2 of packets 2b of ultrashort light pulses 2a with high energy and high repetition frequency. For this reason, subject of the present invention is also an optoelectronic device for the emission of a plurality 2 of packets 2b of ultrashort light pulses 2a with high energy and high repetition frequency, indicated in the attached figures with the reference number 1.

The optoelectronic device 1 comprises an emission LASER apparatus 3 according to the present invention, modulation means 4 configured to pick up and modulate a given number of light pulses 2a from the plurality 2 of ultrashort light pulses 2a emitted by the emission LASER apparatus 3 so as to create packets 2b of modulated ultrashort light pulses 2a, and amplification means 5, located downstream of the modulation means 4, configured to amplify the energy *Eₚ* of each light pulse 2a of the packets 2b of ultrashort light pulses 2a modulated by the modulation means 4. In particular, the amplification means 5 are or comprise at least one single-stage amplifier 5a configured to amplify the energy *Eₚ* of each light pulse 2a of each packet 2b, for example up to the required value from the operational application of the device 1.

The modulation means 4 can advantageously be or comprise at least an acousto-optical modulator 4a, for example a tellurium dioxide crystal, and driving means 4b, for example an electronic driver, if desired operating with a fixed modulation frequency but with a variable amplitude, designed to drive the at least one acousto-optical modulator 4a according to the operational requirements of the device 1.

These operational requirements could be the need to temporarily interrupt the firing or exit of the LASER beam from the device 1, for example in the case in which this device 1 is used in operations of micromachining of materials, such as the execution of a series of spaced holes or the engraving of a motif. In this regard, it is necessary that the device 1 after the execution of a hole, interrupts the LASER output up to the next drilling or engraving position and at that particular point resumes it in order to make the next hole or engraving. Still considering that the device 1 is used in material micromachining operations, another operational requirement could be that of having a different evolution over time of the optical power of the light pulses 2a of each packet 2b according to the material being processed. For example, if the material is glass, it may be necessary to have a customized thermal gradient in order to prevent any breakage.

In this regard, the driving means 4b can drive the acousto-optical modulator 4a by means of a digital signal, for example a TTL signal, designed to activate or deactivate said acousto-optical modulator 4a so that the latter allows the plurality 2 of light pulses 2a to pass when deactivated while diverting the plurality 2 of light pulses 2a towards the input of the amplifier 5a when activated, thus creating packets 2b of modulated ultrashort light pulses 2a and/or by means of an analog signal designed to modulate the amplitude and, consequently, the power, of the packets 2b of light pulses 2a according to the operational requirements of the device 1.

In particular, the light pulses 2a which are not deflected by the acousto-optical modulator 4a, and which therefore do not reach the input of the amplification means 5, can be dissipated by heat dissipation means, for example they can encounter against a dumper, if desired, consisting of a metal element operatively associated with a heat sink. On the contrary, the light pulses 2a which are deflected by the acousto-optical modulator 4a towards the input of the amplification means 5 are modulated.

In practice, the driving means 4b, or more particularly the electronic driver, are capable of controlling the amplitude of the plurality 2 of ultrashort light pulses 2a entering the acousto-optical modulator 4a with an analogue input voltage and/or with a digital input signal, for example to perform an on/off modulation of device 1.

Each packet 2b is preferably composed of a number of light pulses 2a comprised between 50 and 1000, for example 500. This interval is optimal since, assuming by way of example the use of the optoelectronic device 1 in industrial applications of micromachining of materials, the latter preferably operates in the so-called "ablation-cooled regime" which sets a minimum threshold value on the number of light pulses 2a in each packet 2b of the LASER beam leaving the device 1 so that a fast and precise removal of the material being processed can take place.

Regarding the amplification means 5, they receive in input the packets 2b of ultrashort light pulses 2a modulated by the modulation means 4 and amplify them, for example up to the value required by the operative application of the device 1.

In particular, the single-stage amplifier 5a is preferably configured to amplify the energy *Eₚ* of each light pulse of each packet 2b up to a value comprised between about 100 nJ and about 5 µJ, for example between about 100 nJ and about 20 µJ, reaching energy values for each packet 2b up to a few mJ, for example, without any limitation, between about 5 µJ and about 5 mJ.

This single-stage amplifier 5a can advantageously be a solid-state amplifier which comprises pump means 5b intended to amplify the energy *Eₚ* of each light pulse 2a of the packets 2b of ultrashort light pulses 2a, and guide components 5c.

In particular, the pump means 5b preferably comprise at least one gain element 16 and at least one pump element 17 configured to emit, in use, at least one pump light beam PB2, while the guide components 5c can be advantageously configured to guide the packets 2b of ultrashort light pulses 2a in input to the amplifier 5a towards the gain element 16, and the packets 2b of ultrashort light pulses 2a, amplified by the pump means 5b, from the gain element 16 towards the output of the amplifier 5a.

The at least one gain element 16 may be or comprise at least one ytterbium ion doped crystal of the Yb: YAG type or of the Yb: CALGO type having an emission wavelength between about 1020 nm and about 1080 nm and, if desired, having a dopant ion concentration which can vary between 1% and 15%. The Yb: YAG or Yb: CALGO crystal can have, for example, a length between 3 mm and 20 mm and a rectangular or square cross section.

On the other hand, as regards the at least one pump element 17, it can be or advantageously comprise at least one LASER diode configured to emit the at least one pump light beam PB2 with a power of between about 50 W and about 150 W and, if desired, with an emission wavelength between about 935 nm and about 985 nm.

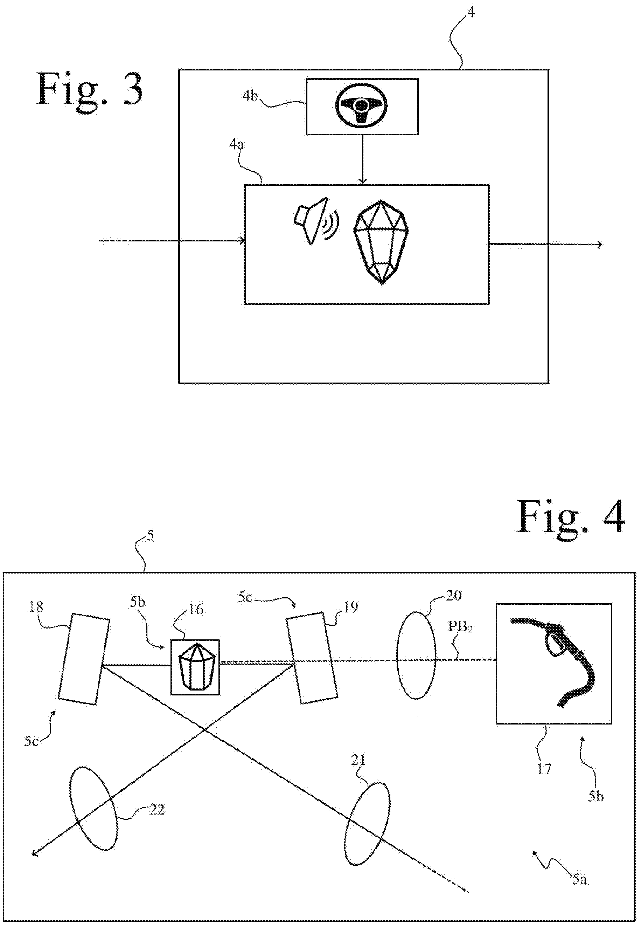

According to the example of embodiment of the amplification means 5 shown in figure 4, the LASER diode operates in a continuous wave or CW regime, i.e., it provides, in use, a pump light beam PB2 that is continuous over time.

In particular, the at least one LASER diode is, preferably, an optical fiber coupled LASER diode that ends with a collimator so as to emit a pump light beam PB2 having flat wave fronts.

According to the non-limiting example of embodiment of the device 1 according to the present invention shown in the figures, the at least one gain element 16 is an ytterbium ion doped crystal of the Yb: YAG type while the at least one pump element 17 is a LASER diode configured to emit at least one pump light beam PB2 with a power of approximately 80 W.

The guide components 5c can advantageously comprise at least a first guide component 18 intended to guide the packets 2b of ultrashort light pulses 2a entering the amplifier 5a towards the gain element 16 and at least a second guide component 19 intended to guide the packets 2b of ultrashort light pulses 2a, amplified by the pump means 5b, from the gain element 16 towards the output of the amplifier 5a.

Preferably, the amplification means 5 also comprise one or more focusing components 20, 21, 22 intended to focus or collimate the at least one pump light beam PB2 emitted by the pump element 17 and/or the packets 2b of ultrashort light pulses 2a in input to the amplifier 5a and/or the packets 2b of ultrashort light pulses 2a amplified by the pump means 5b.

More in detail, the one or more focusing components 20, 21, 22 can be a first lens 20 intended to focus the pump light beam PB2 emitted by the pump element 17 towards the gain element 16 and/or a second lens 21 intended to focus the packets 2b of ultrashort light pulses 2a entering the amplifier 5a and/or a third lens 22, for example a collimating lens, intended to collimate the packets 2b of ultrashort light pulses 2 amplified by pump means 5b.

As regards, instead, the at least one first and second guide components 18, 19, they can be or comprise dichroic mirrors configured with a reflectivity greater than or equal to about 99% at the wavelength of the packets 2b of ultrashort light pulses 2a and a transmissivity greater than or equal to about 95% at the wavelength of the pump light beam PB2 emitted by the pump element 17.

Moreover, the amplifier 5a preferably operates according to a counter-propagating configuration, i.e., the packets 2b of ultrashort light pulses 2a propagate collinearly with the pump light beam PB2 but with a propagation direction opposite to it, and/or in a divergent configuration, i.e., the packets 2b of ultrashort light pulses 2a propagate in the gain element 16 with a divergence value such as to contain the increase in optical intensity due to the amplification process. In fact, the position of the focus of the packets 2b of light pulses 2a to be amplified with respect to the gain element 16 is optimized in order to maximize the spatial or volumetric overlap, inside the gain element 16, between the packets 2b of ultrashort 2a light pulses and the pump light beam PB2.

Basically, the spatial superposition or mode matching between the pump light beam PB2 and the packets 2b of light pulses 2a to be amplified can advantageously be optimized by focusing, for example through the second lens 21, such packets 2b of light pulses 2a with a focus positioned outside the gain element 16 so as to maintain optimal mode matching despite the large difference in divergence between the pump light beam PB2 and the beam containing the packets 2b of light pulses 2a to be amplified.

In particular, the second lens 21 can focus the packets 2b of light pulses 2a to be amplified, for example, with a focus size having a diameter between 1/20 and 1/5 with respect to the size of the diameter of the pump light beam PB2, if desired focused by the first lens 20.

As can be understood, having at the output from the emission LASER apparatus 3 a plurality 2 of ultrashort light pulses 2a as described above allows the relaxation of the amplification requirement necessary downstream of the same. This allows to amplify the packets 2b of light pulses 2a through a sole single-stage amplifier 5a, significantly reducing overall costs and architectural complexity of the optoelectronic device 1.

An example of non-limiting operation of the optoelectronic device 1 is described below according to the example of embodiment shown in the figures.

The emission LASER apparatus 3 generates and transmits at the output, for example through the operation described above, a plurality 2 of highly energetic ultrashort light pulses 2a and with a high repetition frequency. This plurality 2 enters the modulation means 4 or, more in particular, to the acousto-optical modulator 4a which, driven by the driving means 4b according to the application requirements, creates packets 2b of modulated ultrashort light pulses 2a, diverting them towards the single-stage solid-state amplifier 5a input. The packets 2b of light pulses 2a entering the amplifier are first focused through the second lens 21 and then reflected by the first guide component 18 towards the Yb: YAG crystal 16. This Yb: YAG crystal 16 is pumped through the pump light beam PB2 emitted by the LASER diode 17 and focused through the first lens 20 into the gain element 16 according to a counter-propagating operating configuration. Naturally, the pump light beam PB2 is able to pass through the second guide component 19 since it is made with a high transmissivity at the emission wavelength of the same. The pump light beam PB2, directed towards the Yb: YAG crystal 16, excites the atoms of the latter which, when hit or stimulated by the photons of the packets 2b of light pulses 2a, emit photons coherent with them, giving rise to an increase in the intensity of the electromagnetic field and therefore to packets 2b of amplified ultrashort light pulses 2a. Such packets 2b of amplified ultrashort light pulses 2a at the output of the Yb: YAG crystal 16 are first reflected by the second guide component 19 and then collimated by the third lens 22 in the direction of the output of the amplifier 5a so that the size of the LASER beam output does not change appreciably even over considerable propagation distances.

Furthermore, object of the present invention is also a method of emitting a plurality 2 of packets 2b of ultrashort light pulses 2a with high energy and high repetition frequency.

The method according to the present invention initially comprises the step of providing a device 1 according to the present invention or also according to embodiments of the present invention.

Subsequently, there is the step of emitting by means of the emission LASER apparatus 3 a plurality 2 of ultrashort light pulses 2a with a repetition frequency fr greater than or equal to 500 MHz and a value of energy Ep of each pulse between about 2 nJ and 20 nJ.

Thereafter, the step of picking up and modulating, by means of the modulation means 4, a given number of light pulses 2a from the plurality 2 of ultrashort light pulses 2a emitted by the emission LASER apparatus 3 so as to create packets 2b of modulated ultrashort light pulses 2 is foreseen.

In particular, this step of picking up and modulating can comprise the step of driving the acousto-optical modulator 4a of the modulation means 4 by means of the driving means 4b, for example through a digital signal and/or also through an analog signal.

Finally, the method provides for the step of amplifying the packets 2b of modulated ultrashort light pulses 2a by means of the amplification means 5.

The emission LASER apparatus 3 allows the emission in safety and with high operational stability of a plurality 2 of light pulses 2a with high energy and high repetition frequency.

The optoelectronic device 1 provides an alternative and innovative solution for a large variety of industrial, scientific and/or medical operational applications at lower overall costs and with lower architectural complexity than known ultrashort pulses LASER devices based on low power oscillator and multistage amplifiers that use the Chirped Pulse Amplification or CPA technique.

Moreover, the optoelectronic device 1 also allows excellent precision and processing speed, therefore overall, an excellent operational quality, for example when used for micromachining or microsoldering of materials.

It should be considered that the optoelectronic device 1 according to the present invention also has a high scalability since, if necessary or desired, in order to reach higher energies or powers at its output, it may be possible to add in cascade to the amplification means 5, or more particularly to the single-stage amplifier 5a, further single-stage amplifiers so as to achieve the power or energy requirement required by the application in question.

Furthermore, the optoelectronic device 1 according to the present invention does not require the implementation of a stretcher and a compressor, essentially saving both from the point of view of costs and from the point of view of architectural complexity.

It has thus been seen how the invention fully achieves the proposed objects.

## Claims

1. Emission LASER apparatus (3) of a plurality (2) of ultrashort light pulses (2a) with a temporal duration of each light pulse (2a) of the order comprised between about 10 picoseconds and about 10 femtoseconds, wherein
said emission LASER apparatus (3) is or comprises at least one solid-state LASER oscillator (3a) operating, in use, in passive Mode-Locking operating mode and which is configured to emit a plurality (2) of ultrashort light pulses (2a) with a repetition frequency, fr, greater than or equal to about 500 MHz, wherein each light pulse (2a) of the plurality (2) of ultrashort light pulses (2a) has a value of energy, Ep, between about 2 nJ and about 20 nJ,
wherein said oscillator (3a) includes pumping means (3b) comprising at least one gain means (6) and at least one pumping element (7) configured to emit, in use, at least one pumping light beam, PB1, wherein the pumping light beam is designed to be transformed first into a resonant light, then into the plurality (2) of ultrashort light pulses (2a) and subsequently amplified to said value of energy, Ep, by the pumping means (3b), said oscillator (3a) LASER further comprising a resonant cavity, RC, which includes directing means (3c) intended to direct:
- the plurality (2) of ultrashort light pulses (2a) or the resonant light towards said gain means (6), and
- the plurality (2) of ultrashort light pulses (2a) or the resonant light, amplified by said pumping means (3b), from said gain means (6) towards the output of said resonant cavity, RC, and vice versa,
**characterized in that**:
said resonant cavity, RC, is configured so that the focus of the resonant light is positioned within a certain range of distances outside with respect to one of the at least two faces of said gain means (6) crossed by said resonant light to keep its dimension, i.e., the beam width along its development, substantially constant during the passage of said emission LASER apparatus (3) from continuous wave regime to pulsed regime.

2. Emission LASER apparatus (3) according to the preceding claim, wherein said at least one gain means (6) is or comprises at least one ytterbium ion doped crystal of the YAG type or of the CALGO type having an emission wavelength comprised between about 1020 nm and about 1080 nm.

3. Emission LASER apparatus (3) according to any one of the preceding claims, wherein said directing means (3c) comprise:
- one or more first directing elements (8, 9, 10) intended to direct the resonant light in said resonant cavity, RC, or the plurality (2) of ultrashort light pulses (2a) towards said gain means (6); and
- one or more second directing elements (11, 12 13, 14) intended to direct the resonant light into said resonant cavity, RC, or the plurality (2) of ultrashort light pulses (2a), amplified by said pumping means (3b), from said gain means (6) towards the output of said resonant cavity, RC, and vice versa.

4. Emission LASER apparatus (3) according to the preceding claim, wherein at least one directing element (8) of said one or more first directing elements (8, 9, 10) are or comprise at least transformation means (8a) intended to transform the optical light source emitted by said at least one pumping element (7) into a plurality (2) of ultrashort light pulses (2a) and subsequently direct said plurality (2) of ultrashort light pulses (2a) towards said gain means (6).

5. Emission LASER apparatus (3) according to the preceding claim, wherein said transformation means (8a) comprise a saturable absorber or SESAM or a non-linear mirror comprising a non-linear crystal intended, in use, for the generation of a second harmonic, and a dichroic mirror, used in combination with said non-linear crystal, and configured with a reflectivity greater than or equal to about 99% at green wavelengths, and with reflectivity greater than or equal to about 95% at the wavelength of the plurality (2) of ultrashort light pulses (2a).

6. Emission LASER apparatus (3) according to any one of the preceding claims, wherein said resonant cavity, RC, is configured so that the focus of the resonant light is positioned at a distance ranging between about 5 mm and about 30 mm from one of the at least two faces of said gain means (6) crossed by said resonant light.

7. Optoelectronic device (1) for the emission of a plurality (2) of packets (2b) of ultrashort light pulses (2a) with high energy and high repetition frequency, wherein the optoelectronic device (1) comprises an emission LASER apparatus (3) according to any one of claims 1 to 6, modulation means (4) configured to pick up and modulate a given number of light pulses (2a) from the plurality (2) of ultrashort light pulses (2a) emitted by said emission LASER apparatus (3) so as to create packets (2b) of modulated ultrashort light pulses (2a), and amplification means (5), placed downstream of said modulation means (4), configured to amplify the energy, Ep, of each light pulse (2a) of the packets (2b) of ultrashort light pulses (2a) modulated by said modulation means (4), wherein said amplification means (5) are or comprising at least one single-stage amplifier (5a) configured to amplify the energy, Ep, of each light pulse (2a) of each packet (2b).

8. Device (1) according to the preceding claim, wherein said modulation means (4) are or comprise at least one acousto-optical modulator (4a) and driving means (4b) intended to drive said acousto-optical modulator (4a) on the basis to the operational requirements of said device (1).

9. Device (1) according to claim 8, wherein said driving means (4b) are designed to drive said acousto-optical modulator (4a):
- by means of a digital signal designed to activate or deactivate said acousto-optical modulator (4a) so that the latter allows the plurality (2) of light pulses (2a) to pass when deactivated while diverting the plurality (2) of light pulses (2a) towards the input of said amplifier (5a) when activated, thus creating packets (2b) of modulated ultrashort light pulses (2a); and/or
- by means of an analog signal designed to modulate the amplitude and, consequently, the power, of the packets (2b) of light pulses (2a) according to the operational requirements of said device (1).

10. Device (1) according to any one of claims 7 to 9, wherein said amplifier (5a) is a solid-state amplifier which comprises pump means (5b) intended to amplify the energy, Ep, of each light pulse (2a) of the packets (2b) of ultrashort light pulses (2a), said pump means (5b) comprising at least one gain element (16) and at least one pump element (17) configured to emit, in use, at least one pump light beam, PB2, and guide components (5c) configured to guide:
- the packets (2b) of ultrashort light pulses (2a) at the input of said amplifier (5a) towards said gain element (16); and
- the packets (2b) of ultrashort light pulses (2a), amplified by said pump means (5b), from said gain element (16) towards the output of said amplifier (5a).

11. Device (1) according to any one of claims 7 to 10, wherein said amplification means (5) comprise one or more focusing components (20, 21, 22) intended to focus or collimate the at least one pump light beam, PB2, emitted by said at least one pump element (17) and/or the packets (2b) of ultrashort light pulses (2a) in input to said amplifier (5a) and/or the packets (2b) of ultrashort light pulses (2a) amplified by said pump means (5b).

12. Device (1) according to claim 11, wherein said one or more focusing components (20, 21, 22) are a first lens (20) intended to focus the pump light beam, PB2, emitted by said at least a pump element (17) and/or a second lens (21) intended to focus the packets (2b) of ultrashort light pulses (2a) in input to said amplifier (5a) and/or a third lens (22) intended to collimate the packets (2b) of ultrashort light pulses (2a) amplified by said pump means (5b).

13. Device (1) according to the preceding claim, wherein said second lens (21) focuses the packets (2b) of light pulses (2a) with a focus size having a diameter between 1/20 and 1/5 with respect to the focus size of the diameter of the pump light beam, PB2, focused by said first lens (20), so as to adapt the smaller divergence of the packets (2b) of light pulses (2a) to the much greater divergence of said pump light beam, PB2.

14. Device (1) according to any one of claims 7 to 13, wherein said at least one amplifier (5a) operates according to a counter-propagating configuration, that is to say the packets (2b) of ultrashort light pulses (2a) propagate collinearly to the pump light beam, PB2, but with a propagation direction opposite to it, and/or in a divergent configuration, that is to say the packets (2b) of ultrashort light pulses (2a) propagate in said gain element (16) with a divergence value such as to contain the increase in optical intensity due to the amplification process.

15. Method of emitting a plurality (2) of packets (2b) of ultrashort light pulses (2a) with a temporal duration of each light pulse (2a) of the order comprised between about 10 picoseconds and 10 femtoseconds and a repetition frequency, fr, greater than or equal to about 500 MHz,
wherein each light pulse (2a) of the plurality (2) of ultrashort light pulses (2a) has a value of energy, Ep, between about 2 nJ and 20 nJ, comprising the steps of:
providing a device (1) according to any one of claims 7 to 14; emitting through the emission LASER apparatus (3) a plurality (2) of ultrashort light pulses (2a) with a repetition frequency, fr, greater than or equal to about 500 MHz, wherein each light pulse (2a) of the plurality (2) of ultrashort light pulses (2a) has a value of energy, Ep, between about 2 nJ and 20 nJ;
picking up and modulating, by means of the modulation means (4), a determined number of light pulses (2a) from the plurality (2) of ultrashort light pulses (2a) emitted by said emission LASER apparatus (3) so as to create packets (2b) of modulated ultrashort light pulses (2a); and
amplifying, by means of the amplification means (5), the packets (2b) of modulated ultrashort light pulses (2a).

## Patentansprüche

1. Emissions-LASER-Gerät (3) einer Vielzahl (2) von ultrakurzen Lichtimpulsen (2a) mit einer zeitlichen Dauer jedes Lichtimpulses (2a) in der Größenordnung zwischen etwa 10 Pikosekunden und etwa 10 Femtosekunden, worin das besagte Emissions-LASER-Gerät (3) mindestens ein Festkörper-LASER-Oszillator (3a) ist oder diesen umfasst, der, im Gebrauch, im passiven Modenkopplung-Betriebsmodus arbeitet und der so konfiguriert ist, dass er eine Vielzahl (2) von ultrakurzen Lichtimpulsen (2a) mit einer Wiederholungsfrequenz, fr, von mehr als oder gleich etwa 500 MHz emittiert, worin jeder Lichtimpuls (2a) der Vielzahl (2) von ultrakurzen Lichtimpulsen (2a) einen Energiewert, Ep, zwischen etwa 2 nJ und etwa 20 nJ hat,
worin der besagte Oszillator (3a) Pumpmittel (3b) enthält, die mindestens ein Verstärkungsmittel (6) und mindestens ein Pumpelement (7) umfassen, die so konfiguriert sind, dass sie, im Gebrauch, mindestens einen Pumplichtstrahl, PB1, emittieren, worin der Pumplichtstrahl so ausgelegt ist, dass er zuerst in ein Resonanzlicht umgewandelt wird, dann in die Vielzahl (2) von ultrakurzen Lichtimpulsen (2a) und anschließend durch die Pumpmittel (3b) auf den besagten Energiewert, Ep, verstärkt wird, wobei der besagte LASER-Oszillator (3a) ferner einen Resonanzhohlraum, RC, umfasst, der Richtmittel (3c) enthält, die zum Richten bestimmt sind:
- der Vielzahl (2) von ultrakurzen Lichtimpulsen (2a) oder des Resonanzlichts zu dem besagten Verstärkungsmittel (6) hin, und
- der Vielzahl (2) von ultrakurzen Lichtimpulsen (2a) oder des Resonanzlichts, verstärkt durch die besagten Pumpmittel (3b), von dem besagten Verstärkungsmittel (6) zum Ausgang des besagten Resonanzhohlraums, RC, hin und umgekehrt, **dadurch gekennzeichnet, dass**:
der besagte Resonanzhohlraum, RC, so konfiguriert ist, dass der Fokus des Resonanzlichts innerhalb eines bestimmten Bereichs von Abständen außerhalb in Bezug auf eine der besagten mindestens zwei Flächen des besagten Verstärkungsmittels (6), die von dem besagten Resonanzlicht durchquert werden, positioniert ist, um seine Abmessung, d.h. die Breite des Strahls entlang seines Verlaufs, während des Übergangs des besagten Emissions-LASER-Geräts (3) vom Dauerstrichbetrieb zum gepulsten Betrieb im Wesentlichen konstant zu halten.

2. Emissions-LASER-Gerät (3) nach dem vorangegangenen Anspruch, worin das besagte mindestens eine Verstärkungsmittel (6) mindestens ein mit Ytterbium-Ionen dotierter Kristall des YAG-Typs oder des CALGO-Typs mit einer Emissionswellenlänge zwischen etwa 1020 nm und etwa 1080 nm ist oder diesen umfasst.

3. Emissions-LASER-Gerät (3) nach irgendeinem der vorangegangenen Ansprüche, worin die besagten Richtmittel (3c) umfassen:
- ein erstes oder mehrere erste Richtelemente (8, 9, 10), die dazu bestimmt sind, das Resonanzlicht in den besagten Resonanzhohlraum, RC, oder die Vielzahl (2) von ultrakurzen Lichtimpulsen (2a) zu dem besagten Verstärkungsmittel (6) hin zu richten; und
- ein zweites oder mehrere zweite Richtelemente (11, 12, 13, 14), die dazu bestimmt sind, das Resonanzlicht in den besagten Resonanzhohlraum, RC, oder die Vielzahl (2) von ultrakurzen Lichtimpulsen (2a), verstärkt durch die besagten Pumpmittel (3b), von dem besagten Verstärkungsmittel (6) zum Ausgang des besagten Resonanzhohlraums, RC, und umgekehrt zu richten.

4. Emissions-LASER-Gerät (3) nach dem vorangegangenen Anspruch, worin mindestens ein Richtelement (8) des besagten einen oder der mehreren ersten Richtelemente (8, 9, 10) mindestens Transformationsmittel (8a) sind oder umfassen, die dazu bestimmt sind, die von dem besagten mindestens einen Pumpelement (7) emittierte optische Lichtquelle in eine Vielzahl (2) von ultrakurzen Lichtimpulsen (2a) umzuwandeln und anschließend die besagte Vielzahl (2) von ultrakurzen Lichtimpulsen (2a) zu dem besagten Verstärkungsmittel (6) hin zu richten.

5. Emissions-LASER-Gerät (3) nach dem vorangegangenen Anspruch, worin die besagten Transformationsmittel (8a) einen sättigbaren Absorber oder SESAM oder einen nichtlinearen Spiegel, umfassend einen nichtlinearen Kristall, der, im Gebrauch, für die Erzeugung einer zweiten Harmonischen bestimmt ist, und einen dichroitischen Spiegel, der in Kombination mit dem besagten nichtlinearen Kristall verwendet wird, umfassen und mit einem Reflexionsvermögen von mehr als oder gleich etwa 99 % bei grünen Wellenlängen und mit einem Reflexionsvermögen von mehr als oder gleich etwa 95 % bei der Wellenlänge der Vielzahl (2) von ultrakurzen Lichtimpulsen (2a) konfiguriert sind.

6. Emissions-LASER-Gerät (3) nach irgendeinem der vorangegangenen Ansprüche, worin der besagte Resonanzhohlraum, RC, so konfiguriert ist, dass der Fokus des Resonanzlichts in einem Abstand zwischen etwa 5 mm und etwa 30 mm von einer der mindestens zwei Flächen des besagten Verstärkungsmittels (6), die von dem besagten Resonanzlicht durchquert werden, positioniert ist.

7. Optoelektronische Vorrichtung (1) für die Emission einer Vielzahl (2) von Paketen (2b) ultrakurzer Lichtimpulse (2a) mit hoher Energie und hoher Wiederholungsfrequenz, worin die optoelektronische Vorrichtung (1) ein Emissions-LASER-Gerät (3) nach irgendeinem der Ansprüche 1 bis 6, Modulationsmittel (4), die zum Aufnehmen einer gegebenen Anzahl von Lichtimpulsen (2a) aus der Vielzahl (2) von ultrakurzen Lichtimpulsen (2a), die von dem besagten Emissions-LASER-Gerät (3) emittiert werden, konfiguriert sind, um Pakete (2b) von modulierten ultrakurzen Lichtimpulsen (2a) zu erzeugen, und Amplifikationsmittel (5), stromabwärts der besagten Modulationsmittel (4) angeordnet, die so konfiguriert ist, dass sie die Energie, Ep, jedes Lichtimpulses (2a) der Pakete (2b) ultrakurzer Lichtimpulse (2a), die durch die besagten Modulationsmittel (4) moduliert werden, verstärkt, umfasst, worin die besagten Amplifikationsmittel (5) mindestens ein einstufiger Verstärker (5a), der so konfiguriert ist, dass er die Energie, Ep, jedes Lichtimpulses (2a) jedes Pakets (2b) verstärkt, sind oder diesen umfassen.

8. Vorrichtung (1) nach dem vorangegangenen Anspruch, worin die besagten Modulationsmittel (4) mindestens ein akusto-optischer Modulator (4a) und Ansteuerungsmittel (4b) sind oder diese umfassen, die dazu bestimmt sind, den besagten akusto-optischen Modulator (4a) auf der Grundlage der Betriebsanforderungen der besagten Vorrichtung (1) anzusteuern.

9. Vorrichtung (1) nach Anspruch 8, worin die besagten Ansteuerungsmittel (4b) so ausgelegt sind, dass sie den besagten akusto-optischen Modulator (4a) ansteuern:
- mittels eines digitalen Signals, das dazu ausgelegt ist, den besagten akusto-optischen Modulator (4a) zu aktivieren oder zu deaktivieren, so dass letzterer der Vielzahl (2) von Lichtimpulsen (2a) den Durchlass ermöglicht, wenn er deaktiviert ist, während er die Vielzahl (2) von Lichtimpulsen (2a) zum Eingang des besagten Verstärkers (5a) umleitet, wenn er aktiviert ist, wodurch Pakete (2b) von modulierten ultrakurzen Lichtimpulsen (2a) erzeugt werden; und/oder
- mittels eines analogen Signals, das dazu ausgelegt ist, die Amplitude und folglich die Leistung der Pakete (2b) von Lichtimpulsen (2a) entsprechend den Betriebsanforderungen der besagten Vorrichtung (1) zu modulieren.

10. Vorrichtung (1) nach irgendeinem der Ansprüche 7 bis 9, worin der besagte Verstärker (5a) ein Festkörperverstärker ist, der Pumpmittel (5b) umfasst, die dazu bestimmt sind, die Energie, Ep, jedes Lichtimpulses (2a) der Pakete (2b) ultrakurzer Lichtimpulse (2a) zu verstärken, wobei die besagten Pumpmittel (5b), die mindestens ein Verstärkungselement (16) und mindestens ein Pumpelement (17) umfassen, so konfiguriert sind, dass sie, im Gebrauch, mindestens einen Pumplichtstrahl, PB2, emittieren, sowie Leitkomponenten (5c), die so konfiguriert sind, dass sie leiten:
- die Pakete (2b) ultrakurzer Lichtimpulse (2a) am Eingang des besagten Verstärkers (5a) zu dem besagten Verstärkungselement (16) hin; und
- die Pakete (2b) ultrakurzer Lichtimpulse (2a), die durch die besagten Pumpmittel (5b) verstärkt werden, von dem besagten Verstärkungselement (16) zum Ausgang des besagten Verstärkers (5a) hin.

11. Vorrichtung (1) nach irgendeinem der Ansprüche 7 bis 10, worin die besagten Amplifikationsmittel (5) eine oder mehrere Fokussierungskomponenten (20, 21, 22) umfassen, dazu bestimmt sind, den mindestens einen Pumplichtstrahl, PB2, der von dem besagten mindestens einen Pumpelement (17) emittiert wird, und/oder die Pakete (2b) ultrakurzer Lichtimpulse (2a) in Eingang an dem besagten Verstärker (5a), und/oder die Pakete (2b) ultrakurzer Lichtimpulse (2a), die von den besagten Pumpmitteln (5b) verstärkt werden, zu fokussieren oder zu kollimieren.

12. Vorrichtung (1) nach Anspruch 11, worin die besagte eine oder die besagten mehreren Fokussierungskomponenten (20, 21, 22) eine erste Linse (20), die dazu bestimmt ist, den Pumplichtstrahl, PB2, der von dem besagten mindestens einen Pumpelement (17) emittiert wird, zu fokussieren, und/oder eine zweite Linse (21), die dazu bestimmt ist, die Pakete (2b) ultrakurzer Lichtimpulse (2a) in Eingang an dem besagten Verstärker (5a) zu fokussieren, und/oder eine dritte Linse (22), die dazu bestimmt ist, die Pakete (2b) ultrakurzer Lichtimpulse (2a), die durch die besagten Pumpmittel (5b) verstärkt werden, zu kollimieren, sind.

13. Vorrichtung (1) nach dem vorangegangenen Anspruch, worin die besagte zweite Linse (21) die Pakete (2b) von Lichtimpulsen (2a) mit einer Fokusgröße mit einem Durchmesser zwischen 1/20 und 1/5 in Bezug auf die Fokusgröße des Durchmessers des Pumplichtstrahls, PB2, der von der ersten Linse (20) fokussiert wird, fokussiert, um die kleinere Divergenz der Pakete (2b) von Lichtimpulsen (2a) an die viel größere Divergenz des besagten Pumplichtstrahls, PB2, anzupassen.

14. Vorrichtung (1) nach irgendeinem der Ansprüche 7 bis 13, worin der besagte mindestens eine Verstärker (5a) entsprechend einer entgegengesetzt propagierenden Konfiguration, das heißt, die Pakete (2b) ultrakurzer Lichtimpulse (2a) propagieren kollinear zum Pumplichtstrahl, PB2, aber mit einer ihm entgegengesetzten Propagationsrichtung, und/oder in einer divergenten Konfiguration, das heißt, die Pakete (2b) ultrakurzer Lichtimpulse (2a) propagieren in dem besagten Verstärkungselement (16) mit einem solchen Divergenzwert, dass die Zunahme an optischer Intensität aufgrund des Verstärkungsprozesses enthalten ist, arbeitet.

15. Verfahren zum Emittieren einer Vielzahl (2) von Paketen (2b) ultrakurzer Lichtimpulse (2a) mit einer zeitlichen Dauer jedes Lichtimpulses (2a) in der Größenordnung zwischen etwa 10 Pikosekunden und 10 Femtosekunden und einer Wiederholungsfrequenz, fr, von mehr als oder gleich etwa 500 MHz,
worin jeder Lichtimpuls (2a) der Vielzahl (2) von ultrakurzen Lichtimpulsen (2a) einen Energiewert, Ep, zwischen etwa 2 nJ und 20 nJ hat, umfassend die Schritte des:
Bereitstellens einer Vorrichtung (1) nach irgendeinem der Ansprüche 7 bis 14;
Emittierens durch das Emissions-LASER-Gerät (3) einer Vielzahl (2) von ultrakurzen Lichtimpulsen (2a) mit einer Wiederholungsfrequenz, fr, von mehr als oder gleich etwa 500 MHz, worin jeder Lichtimpuls (2a) der Vielzahl (2) von ultrakurzen Lichtimpulsen (2a) einen Energiewert, Ep, zwischen etwa 2 nJ und 20 nJ hat;
Aufnehmens und Modulierens, mittels der Modulationsmittel (4), einer bestimmten Anzahl von Lichtimpulsen (2a) aus der Vielzahl (2) von ultrakurzen Lichtimpulsen (2a), die von dem besagten Emissions-LASER-Gerät (3) emittiert werden, um Pakete (2b) von modulierten ultrakurzen Lichtimpulsen (2a) zu erzeugen; und
Verstärkens, mittels der Amplifikationsmittel (5), der Pakete (2b) von modulierten ultrakurzen Lichtimpulsen (2a).

## Revendications

1. Appareil LASER d'émission (3) d'une pluralité (2) d'impulsions lumineuses ultracourtes (2a) avec une durée temporelle de chaque impulsion lumineuse (2a) de l'ordre compris entre environ 10 picosecondes et environ 10 femtosecondes, dans lequel ledit appareil LASER d'émission (3) est ou comprend au moins un oscillateur LASER à semi-conducteurs (3a) fonctionnant, en cours d'utilisation, en mode de fonctionnement passif à verrouillage de mode et qui est configuré pour émettre une pluralité (2) d'impulsions lumineuses ultracourtes (2a) avec une fréquence de répétition, fr, supérieure ou égale à environ 500 MHz, dans laquelle chaque impulsion lumineuse (2a) de la pluralité (2) d'impulsions lumineuses ultracourtes (2a) a une valeur d'énergie, Ep, comprise entre environ 2 nJ et environ 20 nJ,
dans lequel ledit oscillateur (3a) comprend des moyens de pompage (3b) comprenant au moins un moyen de gain (6) et au moins un élément de pompage (7) configuré pour émettre, en cours d'utilisation, au moins un faisceau lumineux de pompage, PB1, dans lequel le faisceau lumineux de pompage est conçu pour être transformé d'abord en une lumière de résonance, puis en la pluralité (2) d'impulsions lumineuses ultracourtes (2a) et ensuite amplifié à ladite valeur d'énergie, Ep, par le moyen de pompage (3b), ledit oscillateur (3a) LASER comprenant en outre une cavité de résonance, RC, qui comprend des moyens directeurs (3c) destinés à diriger :
- la pluralité (2) d'impulsions lumineuses ultracourtes (2a) ou de lumière de résonance vers ledit moyen de gain (6), et
- la pluralité (2) d'impulsions lumineuses ultracourtes (2a) ou la lumière de résonance, amplifiée par lesdits moyens de pompage (3b), dudit moyen de gain (6) vers la sortie de ladite cavité de résonance, RC, et vice versa, **caractérisé en ce que** :
ladite cavité de résonance RC est configurée de telle sorte que le foyer de la lumière de résonance soit positionné dans une certaine plage de distances à l'extérieur par rapport à l'une des au moins deux faces dudit moyen de gain (6) traversées par ladite lumière de résonance pour maintenir sa dimension, c'est-à-dire la largeur du faisceau le long de son développement, sensiblement constante pendant le passage dudit appareil LASER d'émission (3) du régime d'onde continue au régime pulsé.

2. Appareil LASER d'émission (3) selon la revendication précédente, dans lequel ledit au moins un moyen de gain (6) est ou comprend au moins un cristal dopé aux ions d'ytterbium du type YAG ou du type CALGO ayant une longueur d'onde d'émission comprise entre environ 1 020 nm et environ 1 080 nm.

3. Appareil LASER d'émission (3) selon l'une quelconque des revendications précédentes, dans lequel lesdits moyens directeurs (3c) comprennent :
- un ou plusieurs premiers éléments directeurs (8, 9, 10) destinés à diriger la lumière de résonance dans ladite cavité de résonance, RC, ou la pluralité (2) d'impulsions lumineuses ultracourtes (2a) vers ledit moyen de gain (6) ; et
- un ou plusieurs deuxièmes éléments directeurs (11, 12, 13, 14) destinés à diriger la lumière de résonance dans ladite cavité de résonance, RC, ou la pluralité (2) d'impulsions lumineuses ultracourtes (2a), amplifiées par lesdits moyens de pompage (3b), à partir dudit moyen de gain (6) vers la sortie de ladite cavité de résonance (RC) et vice versa.

4. Appareil LASER d'émission (3) selon la revendication précédente, dans lequel au moins un élément directeur (8) desdits un ou plusieurs premiers éléments directeurs (8, 9, 10) sont ou comprennent au moins des moyens de transformation (8a) destinés à transformer la source lumineuse optique émise par ledit au moins un élément de pompage (7) en une pluralité (2) d'impulsions lumineuses ultracourtes (2a) et à diriger ensuite ladite pluralité (2) d'impulsions lumineuses ultracourtes (2a) vers ledit moyen de gain (6).

5. Appareil LASER d'émission (3) selon la revendication précédente, dans lequel lesdits moyens de transformation (8a) comprennent un absorbeur saturable ou SESAM ou un miroir non linéaire comprenant un cristal non linéaire destiné, en cours d'utilisation, à la génération d'une deuxième harmonique, et un miroir dichroïque, utilisé en combinaison avec ledit cristal non linéaire, et configuré avec une réflectivité supérieure ou égale à environ 99 % aux longueurs d'onde vertes, et avec une réflectivité supérieure ou égale à environ 95 % à la longueur d'onde de la pluralité (2) d'impulsions lumineuses ultracourtes (2a).

6. Appareil LASER d'émission (3) selon l'une quelconque des revendications précédentes, dans lequel ladite cavité de résonance, RC, est configurée de telle sorte que le foyer de la lumière de résonance soit positionné à une distance comprise entre environ 5 mm et environ 30 mm de l'une des au moins deux faces dudit moyen de gain (6) traversées par ladite lumière de résonance.

7. Dispositif optoélectronique (1) pour l'émission d'une pluralité (2) de paquets (2b) d'impulsions lumineuses ultracourtes (2a) à haute énergie et à haute fréquence de répétition, dans lequel le dispositif optoélectronique (1) comprend un appareil LASER d'émission (3) selon l'une quelconque des revendications 1 à 6, des moyens de modulation (4) configurés pour capter et moduler un nombre donné d'impulsions lumineuses (2a) à partir de la pluralité (2) d'impulsions lumineuses ultracourtes (2a) émises par ledit appareil LASER d'émission (3) de manière à créer des paquets (2b) d'impulsions lumineuses ultracourtes (2a) modulées, et des moyens d'amplification (5), placés en aval desdits moyens de modulation (4), configurés pour amplifier l'énergie, Ep, de chaque impulsion lumineuse (2a) des paquets (2b) d'impulsions lumineuses ultracourtes (2a) modulées par lesdits moyens de modulation (4), dans lequel lesdits moyens d'amplification (5) sont ou comprennent au moins un amplificateur à un étage (5a) configuré pour amplifier l'énergie, Ep, de chaque impulsion lumineuse (2a) de chaque paquet (2b).

8. Dispositif (1) selon la revendication précédente, dans lequel lesdits moyens de modulation (4) sont ou comprennent au moins un modulateur acousto-optique (4a) et des moyens de commande (4b) destinés à commander ledit modulateur acousto-optique (4a) sur la base des exigences opérationnelles dudit dispositif (1).

9. Dispositif (1) selon la revendication 8, dans lequel lesdits moyens de commande (4b) sont conçus pour commander ledit modulateur acousto-optique (4a) :
- au moyen d'un signal numérique destiné à activer ou désactiver ledit modulateur acousto-optique (4a) de sorte que ce dernier laisse passer la pluralité (2) d'impulsions lumineuses (2a) lorsqu'il est désactivé tout en déviant la pluralité (2) d'impulsions lumineuses (2a) vers l'entrée dudit amplificateur (5a) lorsqu'il est activé, créant ainsi des paquets (2b) d'impulsions lumineuses ultracourtes (2a) modulées ; et/ou
- au moyen d'un signal analogique conçu pour moduler l'amplitude et, par conséquent, la puissance, des paquets (2b) d'impulsions lumineuses (2a) en fonction des exigences opérationnelles dudit dispositif (1).

10. Dispositif (1) selon l'une quelconque des revendications 7 à 9, dans lequel ledit amplificateur (5a) est un amplificateur à semi-conducteurs qui comprend des moyens de pompe (5b) destinés à amplifier l'énergie, Ep, de chaque impulsion lumineuse (2a) des paquets (2b) d'impulsions lumineuses ultracourtes (2a), lesdits moyens de pompe (5b) comprenant au moins un élément de gain (16) et au moins un élément de pompe (17) configuré pour émettre, en cours d'utilisation, au moins un faisceau lumineux de pompe, PB2, et des composants de guidage (5c) configurés pour guider :
- les paquets (2b) d'impulsions lumineuses ultracourtes (2a) à l'entrée dudit amplificateur (5a) vers ledit élément de gain (16) ; et
- les paquets (2b) d'impulsions lumineuses ultracourtes (2a), amplifiées par lesdits moyens de pompe (5b), dudit élément de gain (16) vers la sortie dudit amplificateur (5a).

11. Dispositif (1) selon l'une quelconque des revendications 7 à 10, dans lequel lesdits moyens d'amplification (5) comprennent un ou plusieurs composants de focalisation (20, 21, 22) destinés à focaliser ou à collimater l'au moins un faisceau lumineux de pompe, PB2, émis par ledit au moins un élément de pompe (17) et/ou les paquets (2b) d'impulsions lumineuses ultracourtes (2a) en entrée audit amplificateur (5a) et/ou les paquets (2b) d'impulsions lumineuses ultracourtes (2a) amplifiés par lesdits moyens de pompe (5b).

12. Dispositif (1) selon la revendication 11, dans lequel lesdits un ou plusieurs composants de focalisation (20, 21, 22) sont une première lentille (20) destinée à focaliser le faisceau lumineux de pompe, PB2, émis par ledit au moins un élément de pompe (17) et/ou une deuxième lentille (21) destinée à focaliser les paquets (2b) d'impulsions lumineuses ultracourtes (2a) en entrée audit amplificateur (5a) et/ou une troisième lentille (22) destinée à collimater les paquets (2b) d'impulsions lumineuses ultra-courtes (2a) amplifiées par lesdits moyens de pompe (5b).

13. Dispositif (1) selon la revendication précédente, dans lequel ladite deuxième lentille (21) focalise les paquets (2b) d'impulsions lumineuses (2a) avec une taille de foyer ayant un diamètre compris entre 1/20 et 1/5 par rapport à la taille de foyer du diamètre du faisceau lumineux de pompe, PB2, focalisé par ladite première lentille (20), de manière à adapter la divergence plus petite des paquets (2b) d'impulsions lumineuses (2a) à la divergence beaucoup plus grande dudit faisceau lumineux de pompe, PB2.

14. Dispositif (1) selon l'une quelconque des revendications 7 à 13, dans lequel ledit au moins un amplificateur (5a) fonctionne selon une configuration de contre-propagation, c'est-à-dire que les paquets (2b) d'impulsions lumineuses ultracourtes (2a) se propagent de manière colinéaire au faisceau lumineux de pompe, PB2, mais avec une direction de propagation opposée à celui-ci, et/ou dans une configuration divergente, c'est-à-dire que les paquets (2b) d'impulsions lumineuses ultracourtes (2a) se propagent dans ledit élément de gain (16) avec une valeur de divergence telle qu'elle contient l'augmentation de l'intensité optique due au processus d'amplification.

15. Procédé d'émission d'une pluralité (2) de paquets (2b) d'impulsions lumineuses ultracourtes (2a) avec une durée temporelle de chaque impulsion lumineuse (2a) de l'ordre compris entre environ 10 picosecondes et 10 femtosecondes et une fréquence de répétition, fr, supérieure ou égale à environ 500 MHz,
dans lequel chaque impulsion lumineuse (2a) de la pluralité (2) d'impulsions lumineuses ultracourtes (2a) a une valeur d'énergie, Ep, comprise entre environ 2 nJ et 20 nJ, comprenant les étapes de :
fourniture d'un dispositif (1) selon l'une quelconque des revendications 7 à 14 ;
émission, par l'intermédiaire de l'appareil LASER d'émission (3), d'une pluralité (2) d'impulsions lumineuses ultracourtes (2a) avec une fréquence de répétition, fr, supérieure ou égale à environ 500 MHz, dans laquelle chaque impulsion lumineuse (2a) de la pluralité (2) d'impulsions lumineuses ultracourtes (2a) a une valeur d'énergie, Ep, comprise entre environ 2 nJ et 20 nJ ;
captage et modulation, au moyen des moyens de modulation (4), d'un nombre déterminé d'impulsions lumineuses (2a) à partir de la pluralité (2) d'impulsions lumineuses ultracourtes (2a) émises par ledit appareil LASER d'émission (3) de manière à créer des paquets (2b) d'impulsions lumineuses ultracourtes modulées (2a) ; et
amplification, au moyen des moyens d'amplification (5), des paquets (2b) d'impulsions lumineuses ultracourtes modulées (2a).
